# EUROPÄISCHE PATENTSCHRIFT

(11) **EP 1 760 280 B1**
(45) Veröffentlichungstag und Bekanntmachung des Hinweises auf die Patenterteilung: **17.02.2010**
(21) Anmeldenummer: 06017121.2
(22) Anmeldetag: 17.08.2006
(51) Int. Cl.: F01N 3/031, F01N 3/033, F01N 1/24, F01N 1/02

(54) **Abgasnachbehandlungssystem**
Exhaust gas after-treatment system
Système de traitement des gaz d'échappement

(30) Priorität: 06.09.2005 DE 102005042186
(43) Veröffentlichungstag der Anmeldung: 07.03.2007
(73) Patentinhaber: Eberspächer Unna GmbH & Co. KG, 59423 Unna (DE)
(72) Erfinder: Hüthwohl, Georg Dr., 59494 Soest (DE)
(74) Vertreter: Diehl & Partner

(56) Entgegenhaltungen:
- EP-A1- 0 593 004
- EP-A1- 0 719 914
- WO-A-2004/090295
- BE-A6- 1 009 454
- GB-A- 1 213 206
- US-A- 4 866 932
- US-A- 5 293 742

## Beschreibung

Die Erfindung betrifft ein Abgasnachbehandlungssystem für ein Kraftfahrzeug mit Verbrennungsmotor, mit einem Gehäuse mit einer ersten und einer zweiten Kammer und einem Abgasreinigungselement sowie Mitteln zur Schalldämpfung.

Aus der DE 100 42 542 A1 ist ein Abgasnachbehandlungssystem für einen Verbrennungsmotor eines Kraftfahrzeugs bekannt, bei welchem ein Abgasschalldämpfer, ein Abgaspartikelfilterelement und ein SCR-Katalysator in einem gemeinsamen Gehäuse zusammengefasst sind. Dabei ist das Gehäuse durch Trennwände in mehrere der Gasführung und der Schalldämpfung dienende Kammern aufgeteilt. Die in eine Abgaseinlasskammer des Abgasnachbehandlungssystems der DE 100 42 542 A1 eingeströmten Abgase werden zunächst dem Abgaspartikelfilterelement zugeführt. Nach Austritt aus dem Abgasnachbehandlungssystem in eine weitere Kammer werden die gefilterten Abgase von dort durch eine Rohrleitung geleitet, für die ein Zufuhrstutzen für eine Zugabe von Harnstoff vorgesehen ist. Die Rohrleitung mündet in eine weitere Kammer, von wo aus die Abgase über einen SCR-Katalysator geführt werden. Für eine Reinigung bzw. eine Regeneration des Abgaspartikelfilterelements ist ein Ausblasen bzw. ein Freibrennen mittels eines Dieselbrenners vorgesehen.

Das Abgasnachbehandlungssystem der DE 100 42 542 A1 ist vergleichsweise kompliziert ausgeführt. Insbesondere die Reinigung des Partikelfilterelements ist mit einem beträchtlichen Aufwand verbunden. Deshalb ist eine ständige Betriebsbereitschaft nicht sichergestellt.

Aus WO 2004/090295 A1 ist ein Abgasreinigungs-Schalldämpfermodul bekannt, welches eine Abgaseinlaßkammer, einen im Abgasstrom hinter der Abgaseinlaßkammer angeordneten Abgasreinigungsbereich und einen im Abgasstrom hinter dem Abgasreinigungsbereich angeordneten Schalldämpfungsbereich aufweist. Hierbei ist ein Gaswegschaltmittel vorgesehen, um dann, wenn das Abgasreinigungselement zu stark beladen ist, in Abhängigkeit von dem in der Abgaseinlaßkammer vorhandenen Druck einen direkten Übertritt des Abgases von der Abgaseinlaßkammer in den Schalldämpfungsbereich zu ermöglichen.

Es hat sich gezeigt, daß das herkömmliche Abgasreinigungs-Schalldämpfermodul bei manchen Betriebsbedingungen nicht zuverlässig arbeitet.

Aufgabe der Erfindung ist es, ein auch unter ungünstigen Bedingungen zuverlässig zu betreibendes Abgasnachbehandlungssystem anzugeben, welches einfach und sicher zu montieren ist.

Diese Aufgabe wird durch ein Abgasnachbehandlungssystem mit den Merkmalen des Anspruchs 1 gelöst.

Das erfindungsgemäße Abgasnachbehandlungssystem ist als kombiniertes Abgasreinigungs-Schalldämpfermodul (ASD-Modul) ausgeführt. Charakteristischerweise ist im Gehäuse des erfindungsgemäßen ASD-Moduls eine durch eine Trennwand von der als Abgaseinlasskammer ausgebildeten ersten Kammer abgetrennte zweite Kammer vorgesehen, die einen Abgasreinigungsbereich mit einem darin angeordneten Abgasreinigungselement und einen Schalldämpfungsbereich mit darin angeordneten Mitteln zur Schalldämpfung aufweist. Ferner sind Gaswegeschaltmittel vorgesehen, die in Abhängigkeit vom in der ersten Kammer vorhandenen Druck einen direkten Übertritt der Abgase von der ersten Kammer in den Schalldämpfungsbereich versperren oder ermöglichen.

Diese erfindungsgemäße Ausführungsform ermöglicht auch bei ungünstigen Druckverhältnissen einen zuverlässigen Betrieb des ASD-Moduls. Beispielsweise können bei hoher Motorlast und einem damit verbundenen hohen Staudruck in der Abgaseinlasskammer die Abgase zu einem mehr oder weniger großen Anteil direkt in den Schalldämpfungsbereich geleitet werden. Auf diese Weise kann eine Überlastung des Abgasreinigungselements vermieden werden. Unzulässig hohe Staudrücke können jedoch auch bei niedriger Last und verhältnismäßig geringem Abgasdurchsatz bei einem mit Partikeln zugesetzten Abgasreinigungselement auftreten.

In Ausgestaltung der Erfindung ist das ASD-Modul als autonom betreibbares Nachrüstbauteil ausgeführt. Unter einem autonomen Betrieb ist dabei zu verstehen, dass das ASD-Modul unter Verzicht auf eine Zufuhr von Zusatzstoffen oder eine Ansteuerung von außen vollständig oder zumindest weitestgehend selbständig betreibbar ist. Eine Sensorik, Aktuatoren und die zugehörigen Schnittstellen mit Signalübergabe sowie Hilfsenergien sind nicht erforderlich. Ein nachträglicher Einbau in bestehende Abgasanlagen ist daher ohne weiteres möglich. Hierzu trägt insbesondere die mit den Gaswegeschaltmitteln erreichte Betriebssicherheit bei. Weniger leistungsfähige Abgasreinigungsanlagen können mit dem erfindungsgemäßen ASD-Modul nachgerüstet und erweitert werden und genügen dann erhöhten Anforderungen. Dabei sind allenfalls geringe, vorzugsweise keine Änderungen an einer bestehenden Motorsteuerung notwendig. Es ist vorgesehen, dass das ASD-Modul als Ersatz für übliche Schalldämpfer in bestehende Abgasablagen einsetzbar ist, was einen nachträglichen Einbau besonders vereinfacht, da kein zusätzlicher Bauraum benötigt wird. Erreicht werden kann dies beispielsweise mit kompatiblen Anschlüssen für den Abgaseinlass und/oder für den Abgasauslass sowie mit zu üblichen Schalldämpfern weitgehend kompatiblen Abmessungen.

In weiterer Ausgestaltung der Erfindung ist das Abgasreinigungselement als Partikelfilter ausgebildet. Dabei ist eine Ausführung des Partikelfilters als ein aus Sintermetallfilterplatten aufgebautes Filterpaket besonders vorteilhaft, da diese Art von Partikelfilter eine erhöhte Speicherkapazität gegenüber Asche- und/oder Rußpartikeln aufweisen. Infolge der erfindungsgemäßen Gaswegeumschaltung können erhöhte Staudrücke und damit ein verschlechterter Motorbetrieb beispielsweise infolge einer Filterverstopfung vermieden werden. Für eine selbsttätige Regeneration des Partikelfilters unter Verzicht auf von außen eingeleitete Maßnahmen ist es vorteilhaft, wenn der Partikelfilter katalytisch beschichtet ausgeführt ist. Alternativ oder zusätzlich kann dem ASD-Modul ein Oxidationskatalysator vorgeschaltet sein. Im Oxidationskatalysator aus Stickstoffmonoxid (NO) gebildetes Stickstoffdioxid (NO₂) kann im Partikelfilter angesammelte Rußpartikel abbauen, was zu einer autonomen Betriebsweise des ASD-Moduls beiträgt. Dabei ist eine Modulbauweise für den Oxidationskatalysator besonders bevorzugt. Auf diese Weise ist es möglich, ASD-Modul und Oxidationskatalysator gemeinsam als Nachrüstbauteile einzusetzen.

In weiterer Ausgestaltung der Erfindung ist ein Abgasaustrittsrohr vorgesehen, das eine Ableitung von Abgas aus dem Schalldämpfungsbereich heraus in den Außenbereich des Gehäuses ermöglicht, wobei das Abgasaustrittsrohr einen im Schalldämpfungsbereich angeordneten Resonator aufweist oder im Schalldämpfungsbereich wenigstens abschnittsweise perforiert ausgeführt ist. Diese Ausführungsformen ermöglichen eine besonders effektive Schalldämpfung. Eine weitere Verbesserung der Schalldämpfungswirkung kann erzielt werden, wenn in weiterer Ausgestaltung der Erfindung der Schalldämpfungsbereich wenigstens teilweise mit einem Dämmmaterial ausgefüllt ist.

Erfindungsgemäß umfassen die Gaswegeschaltmittel ein Schaltventil. Im Vergleich zu anderen Umschaltbauteilen wie Klappen, Schiebehülsen oder dergleichen, ermöglicht diese Ausführungsform eine verbesserte Betriebszuverlässigkeit. Dabei ist es besonders bevorzugt, wenn das Schaltventil in weiterer Ausgestaltung der Erfindung als ein vom Abgasdruck in der ersten Kammer gesteuertes, autonom arbeitendes Schaltventil ausgeführt ist. Auf diese Weise kann auf eine Hilfskraftbetätigung wie einen Elektromotor, einen Elektromagneten oder eine Pneumatik verzichtet werden.

In weiterer Ausgestaltung der Erfindung umfassen die Gaswegeschaltmittel ein von der ersten Kammer durch die Trennwand in den Schalldämpferbereich der zweiten Kammer geführtes Überströmrohr, dessen im Schalldämpferbereich der zweiten Kammer angeordnetes Ende von einem Dichtelement des Schaltventils in Schließstellung verschlossen ist und in Offenstellung freigegeben ist. Diese Bauweise ist besonders robust und zudem einfach zu montieren, da beim Zusammenbau des ASD-Moduls Lagejustierungen weitgehend unnötig sind.

In weiterer Ausgestaltung der Erfindung weist das Schaltventil ein auf das Dichtmittel des Schaltventils einwirkendes, außerhalb des Gehäuses angeordnetes Betätigungselement auf. Das Betätigungselement ist infolge der Anordnung außerhalb des Gehäuses wenig temperaturbelastet, was der Betriebszuverlässigkeit zugute kommt.

In weiterer Ausgestaltung der Erfindung ist das Gehäuse doppelwandig ausgeführt. Daraus resultiert eine gute Wärmeisolation, die durch ein Ausfüllen des sich zwischen den Wänden ergebenden Hohlraums mit isolierendem Material weiter verbessert werden kann.

Vorteilhafte Ausführungsformen der Erfindung sind in den Zeichnungen veranschaulicht und werden nachfolgend beschrieben. Dabei sind die vorstehend genannten und nachfolgend noch zu erläuternden Merkmale nicht nur in der jeweils angegebenen Merkmalskombination, sondern auch in anderen Kombinationen oder in Alleinstellung verwendbar, ohne den Rahmen der vorliegenden Erfindung zu verlassen.

Dabei zeigen:
- Fig. 1: eine erste vorteilhafte erste Ausführungsform des erfindungsgemäßen ASD-Moduls,
- Fig. 2: einen Ausschnitt des Rückwandbereichs des ASD-Moduls mit einem eingebauten Schaltventil,
- Fig. 3: eine vorteilhafte Ausführungsform des Schaltventils gemäß Fig. 3,
- Fig. 4: eine zweite vorteilhafte Ausführungsform des erfindungsgemäßen ASD-Moduls,
- Fig. 5: eine dritte vorteilhafte Ausführungsform des erfindungsgemäßen ASD-Moduls und
- Fig. 6: eine Kombination des erfindungsgemäßen ASD-Moduls mit einem Katalysatormodul.

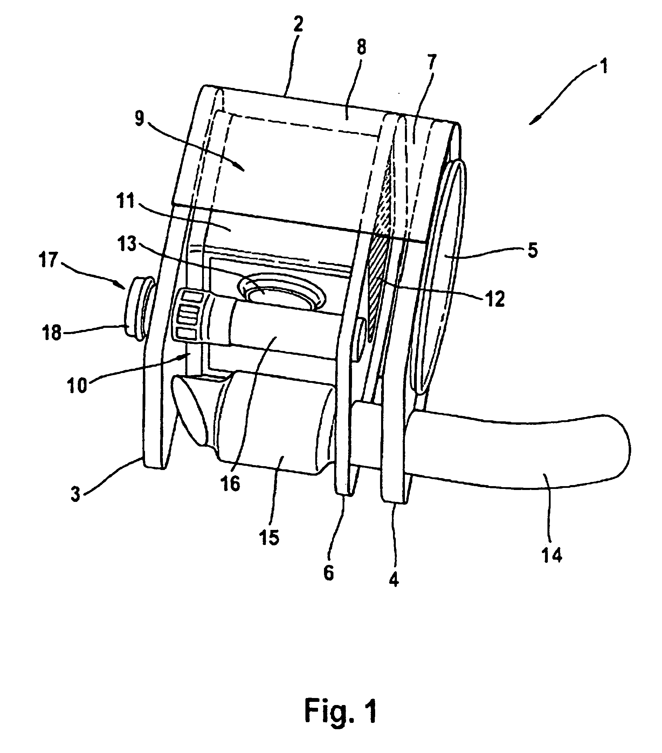

Nachfolgend wird unter Bezug auf die Figuren 1 bis 6 auf vorteilhafte Ausführungsformen des erfindungsgemäßen ASD-Moduls und deren Funktionen und Ausbaumöglichkeiten eingegangen.

In Fig. 1 ist eine vorteilhafte erste Ausführungsform eines erfindungsgemäßen ASD-Moduls für einen Kraftfahrzeugverbrennungsmotor dargestellt. Ein annähernd quaderförmiges Gehäuse 2 des ASD-Moduls 1 ist dabei teilweise aufgeschnitten dargestellt. Das Gehäuse 2 weist eine Gehäuserückwand 3 und eine Gehäusevorderwand 4 auf. Im Gehäuse 2 ist durch eine Trennwand 6 eine Aufteilung in eine erste Kammer 7 und eine zweite Kammer 8 vorgesehen. Dabei ist die erste Kammer 7 als Abgaseinlasskammer ausgeführt, in welche Abgas durch eine Gaseintrittsöffnung 5 in der Gehäusevorderwand 4 eintreten kann. Die zweite Kammer 8 weist einen Abgasreinigungsbereich 9 und einen Schalldämpfungsbereich 10 auf, wobei im Abgasreinigungsbereich 9 ein als Partikelfilter 11 ausgebildetes Abgasreinigungselement angeordnet ist. Der Partikelfilter 11 ist abgaseinlassseitig in die Trennwand 6 eingesetzt, so dass sein Abgaseintritt 12 in die Abgaseinlasskammer 7 ragt. Dabei dient die Trennwand 6 abgaseinlassseitig als mechanische Halterung für den Partikelfilter 11. Auf der gegenüberliegenden Seite ist der Partikelfilter 11 in nicht näher dargestellter Weise an der Gehäuserückwand 3 befestigt.

Der Partikelfilter 11 ist vorzugsweise als ein aus Sintermetallfilterplatten aufgebautes Filterpaket ausgebildet, wobei das Filterpaket, abgesehen vom Abgaseintritt 12 und einer in die den Schalldämpfungsbereich 10 der zweiten Kammer 8 ausmündenden Abgasaustritt 13 gasdicht von einem Gehäusemantel umschlossen ist.

In die Abgaseinlasskammer 7 eingetretenes Abgas kann einerseits über den Partikelfilter 11 unter gleichzeitiger Filterung und andererseits auch über ein gasdicht durch die Trennwand 6 geführtes Überströmrohr 16 in den Schalldämpfungsbereich 10 der zweiten Kammer 8 gelangen. Das Überströmrohr 16 ist jedoch unter normalen Bedingungen durch ein Schaltventil 17 verschlossen, worauf weiter unten näher eingegangen wird. Nachdem das Abgas in den Schalldämpfungsbereich 10 gelangt ist, wird es über ein Abgasaustrittsrohr 14 in den Außenbereich des Gehäuses 2 geleitet. Das Abgasaustrittsrohr ist dabei gasdicht durch Öffnungen in der Trennwand 6 und Gehäusevorderwand geführt. Selbstverständlich ist eine andere Rohrführung, etwa direkt aus der zweiten Kammer 8 heraus ebenfalls möglich. Das ASD-Modul 1 durchströmendes Abgas erfährt daher unter normalen Bedingungen eine Abgasreinigung, in der dargestellten Ausführungsform des ASD-Moduls 1 in Form einer Partikelfilterung.

Die Schalldämpfung der Abgasströmung erfolgt im Schalldämpfungsbereich 10 der zweiten Kammer 8 bereits zum Teil dadurch, dass der Schalldämpfungsbereich als Expansionsraum für die Abgase wirkt. Eine weitere wirksame Schalldämpfung wird durch einen Resonator 15 erreicht, der in das Abgasaus-Lrittsrohr 14 integriert ist.

Für das erfindungsgemäße ASD-Modul ist eine Ausführung als autonom betreibbares Nachrüstbauteil vorgesehen. In dieser Ausführungsform ist die Funktionsfähigkeit des ASD-Moduls unter Verzicht auf Ansteuerungen von außen gewährleistet. In diesem Fall sind keine Steuerschnittstellen erforderlich, so dass das ASD-Modul ohne weiteres in eine bestehende Abgasanlage, gegebenenfalls als Ersatz für einen bestehenden Schalldämpfer, eingesetzt werden kann. Die autonome Betriebsfähigkeit ist auch dadurch gekennzeichnet, dass auf von außen in Gang gesetzte Maßnahmen für eine aktive Partikelfilterregeneration in Form eines thermischen Rußabbrands verzichtet werden kann. Hierzu ist es vorteilhaft, den Partikelfilter mit einer die Rußabbrandtemperatur absenkenden katalytischen Beschichtung zu versehen. Diese ist so ausgelegt, dass bei den im normalen Betrieb zumindest zeitweilig auftretenden erhöhten Abgastemperaturen ein Rußabbrand selbsttätig ablaufen kann. Hierfür ist es zweckmäßig, das Gehäuse doppelwandig auszuführen, wobei der sich ergebende Zwischenraum zur weiteren Verbesserung der Wärmeisolationswirkung mit geeignetem Isolationsmaterial ausgefüllt sein kann. Diese Maßnahme vermindert zudem die Schallabstrahlung. Der Partikelfilter 11 ist somit kontinuierlich regenerierbar ausgeführt. Externe Überwachungseinrichtungen, beispielsweise in Form von Differenzdruck- oder Beladungssensoren und deren Anschluss an eine Motorsteuerung können daher entfallen.

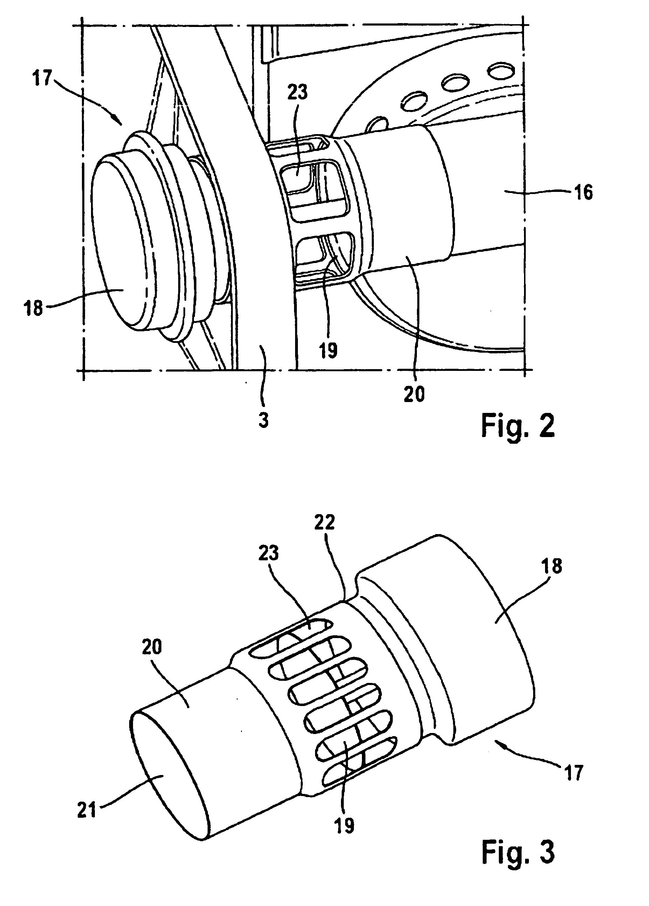

Ein sicherer Motorbetrieb bei gegebenenfalls dennoch auftretenden erhöhten Staudrucken, beispielsweise infolge einer erhöhten Partikelfilterbeladung, wird durch das in Fig. 2 näher dargestellte Schaltventil 17 gewährleistet. Dabei zeigt Fig. 2 das Schaltventil 17 in eingebautem Zustand und in einer bei niedrigem Abgasdruck in der Abgaseinlasskammer 7 gegebenen Schließstellung, bei der ein Ventilteller 19 des Schaltventils 17 das Überströmrohr 16 verschließt. Bei niedrigem Abgasdruck in der Abgaseinlasskammer 7 strömen daher die Abgase vollständig durch den Partikelfilter 11. Tritt ein erhöhter Staudruck in der Abgaseinlasskammer 7 auf, so steht dieser auch im Inneren des Überströmrohrs 16 an und wirkt als Steuerdruck auf ein außerhalb des Gehäuses 2 angeordnetes Schaltorgan 18 des Schaltventils 17. Bei einer vorab durch Einstellung vorgegebenen Höhe des Steuerdrucks bewirkt das Schaltorgan 18 ein Abheben des Ventiltellers 19, so dass für das Abgas ein zusätzlicher Gasweg von der Abgaseinlasskammer 7 in den Schalldämpfungsbereich 10 der zweiten Kammer 8 freigegeben ist. Somit wird der Staudruck in der Abgaseinlasskammer 7 auch bei einem weiter ansteigenden Abgasstrom vermindert oder auf einen Wert begrenzt, der einen sicheren Motorbetrieb gewährleistet.

Infolge der Ansteuerung des Schaltventils 17 durch den in der Abgaseinlasskammer wirkenden Steuerdruck ist ein autonomer Betrieb des Schaltventils 17 unter Verzicht auf eine äußere Ansteuerung in Form einer elektrischen oder pneumatischen Hilfskraft ermöglicht.

Eine einfache Montage des Schaltventils 17 wird durch den Einsatz eines als Käfighülse ausgebildeten Übergangsstutzens 20 erreicht, wie am besten aus der in Fig. 3 gezeigten Darstellung ersichtlich ist. Das Schaltventil 17 wird vor dem Zusammenbau des ASD-Moduls in eine endseitige Öffnung 22 des Übergangsstutzen 20 eingesteckt. Anschließend kann der Übergangsstutzen 20 samt anmontiertem Schaltventil 17 von außen durch eine entsprechende Öffnung in der Gehäuserückwand 3 mit seiner anderen endseitigen Öffnung 21 auf das Überströmrohr 16 geschoben werden. Dadurch entfallen aufwändige Lagejustierungen. In Fig. 3 ist das Schaltventil in einer geöffneten Stellung mit abgehobenem Ventilteller 19 dargestellt. Durch das Überströmrohr 16 können dabei im montierten Zustand die Abgase seitlich aus den Käfigschlitzen 23 des Übergangsstutzens 20 in den Schalldämpfungsbereich 10 des ASD-Moduls strömen.

Hinsichtlich einer Öffnung des Schaltventils 17 kann vorgesehen sein, dass der Ventilteller zunächst nur wenige Millimeter abhebt und dabei der freigegebene Strömungsquerschnitt zunächst konstant bleibt, was sich vorteilhaft auf die Schalldämpfung auswirkt. Die Druck-Öffnungskennlinie kann so ausgelegt sein, dass sich ab Erreichen des für eine Öffnung maßgebenden Steuerdrucks mit weiter ansteigendem Druck eine allmähliche weitere Öffnung ergibt. Bevorzugt ist jedoch eine mit ansteigendem Druck sich rasch bis auf die maximale Öffnungsweite ansteigende Öffnung. Die Charakteristik des Schaltventils 17 kann ferner so ausgelegt sein, dass bei Erreichen des für die Öffnung des Schaltventils 17 maßgebenden Staudrucks in der Abgaseinlasskammer 7 das Schaltventil 17 nur so weit öffnet, dass lediglich ein Teil der Abgase durch das Überströmrohr 16 in den Schalldämpfungsbereich 10 strömt, während der andere Teil weiterhin durch den Partikelfilter 11 strömt. Auf diese Weise wird eine zumindest teilweise Abgasreinigung aufrechterhalten. Besonders bevorzugt ist es, wenn die Charakteristik in der Art einer Gleichdruck-Charakteristik derart ausgelegt, dass bei Erreichen des für die Öffnung des Schaltventils 17 maßgebenden Staudrucks auch bei weiter ansteigendem Abgasstrom in das ASD-Modul 1 der Druck in der Abgaseinlasskammer 7 annähernd konstant bleibt. Weiter ist es vorteilhaft, wenn die Druck-Öffnungskennlinie eine Hysterese aufweist. Auf diese Weise kann ein Ventilflattern vermieden werden.

Um eine Ableitung besonders großer Abgasströme direkt von der Abgaseinlasskammer 7 in die zweite Kammer 8 mit möglichst geringem Druckverlust zu ermöglichen, können auch zwei oder mehrere parallel geschaltete Schaltventile 17 in Verbindung mit entsprechenden Überströmrohren 16 eingesetzt werden.

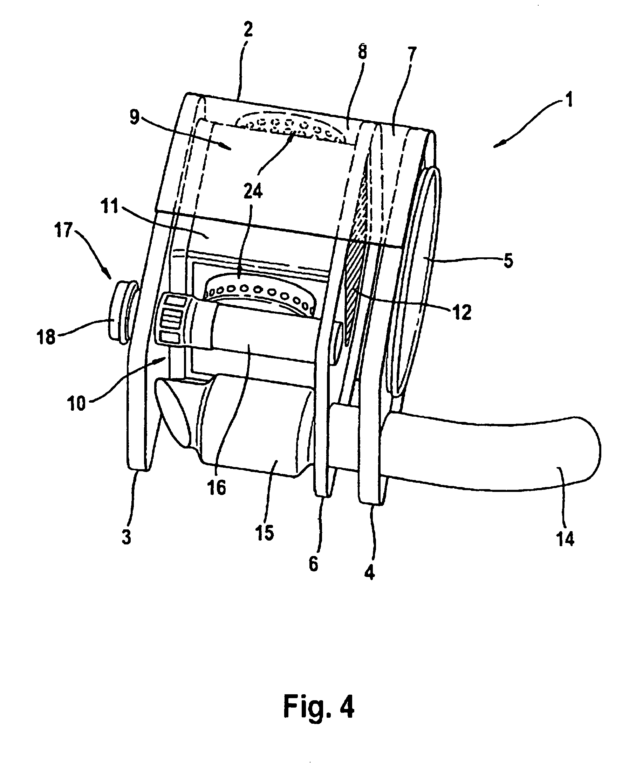

In Fig. 4 ist eine zweite vorteilhafte Ausführungsform des erfindungsgemäßen ASD-Moduls dargestellt. Das ASD-Modul gemäß Fig. 2 unterscheidet sich von dem in Fig. 1 dargestellten ASD-Modul im Wesentlichen durch zusätzliche schalldämpfende Mittel im Bereich des Abgasaustritts aus dem Partikelfilter 11. Dabei sind ferner im Unterschied zum ASD-Modul gemäß Fig. 1 für den Partikelfilter 11 zwei sich gegenüberliegende Abgasaustritte vorgesehen. Die entsprechenden Abgasaustrittsöffnungen sind durch stirnseitig geschlossen ausgeführte Ausströmbecher 24 abgedeckt. Die Ausströmbecher 24 sind umfangsseitig gleichmäßig perforiert ausgeführt, wodurch eine verbesserte Gleichverteilung des ausströmenden Abgases bei gleichzeitig verbesserter Schalldämpfung erreicht wird. Es ist selbstverständlich möglich, den Ausströmbecher 24 auch bei einem Partikelfilter mit nur einer Abgasaustrittsöffnung vorzusehen.

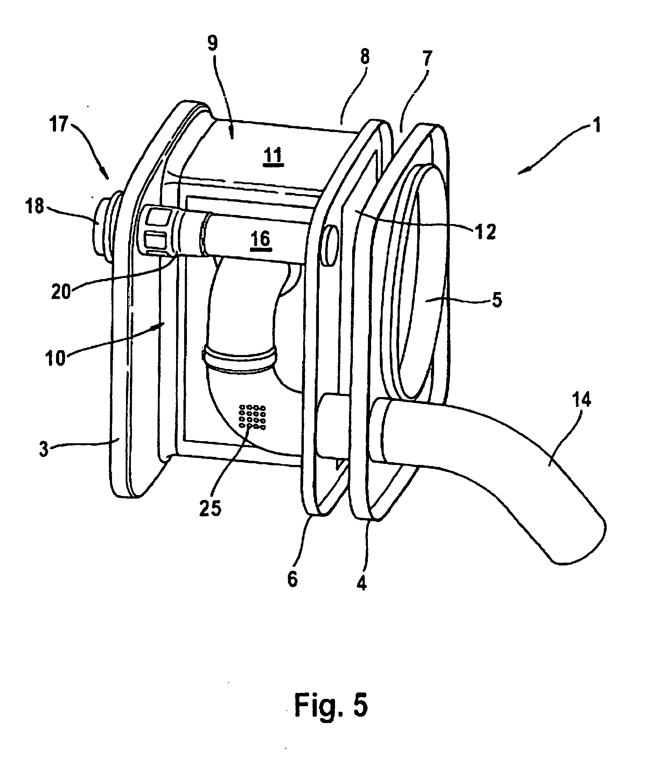

In Fig. 5 ist eine dritte vorteilhafte Ausführungsform des erfindungsgemäßen ASD-Moduls dargestellt. Das ASD-Modul gemäß Fig. 2 unterscheidet sich von dem in Fig. 1 dargestellten ASD-Modul durch ein direkt an den Abgasaustritt des Partikelfilters 11 angeschlossene Abgasaustrittsrohr 14. Zur Schalldämpfung weist das Abgasaustrittsrohr 14 im Schalldämpfungsbereich 10 einen perforierten Abschnitt 25 auf. Zusätzlich oder alternativ kann vorgesehen sein, den Schalldämpfungsbereich 10 vollständig oder teilweise mit schalldämmend wirkendem Füllmaterial auszufüllen. Ferner kann für eine verbesserte Ableitung von über das Überströmrohr 16 und das Schaltventil 17 in den Schalldämpfungsbereich 10 einströmende Abgase eine Rohrverbindung zwischen dem Übergangsstutzen 20 und dem Abgasrohr 14 vorgesehen sein, was in Fig. 5 nicht näher dargestellt ist.

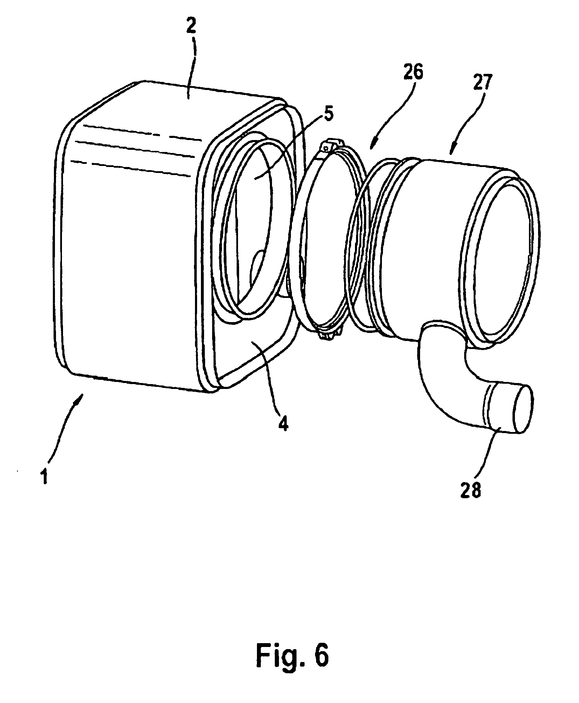

Eine weiter verbesserte Abgasreinigung kann durch Kombination des ASD-Moduls mit einem weiteren, vorzugsweise vorgeschalteten Katalysatormodul erreicht werden. Ist für das ASD-Modul ein Partikelfilter als Abgasreinigungselement vorgesehen, so ist es für einen zuverlässigen Betrieb insbesondere vorteilhaft, wenn ein Oxidationskatalysatormodul vorgesehen ist. Dieses ist bevorzugt ebenfalls in Modulbauweise ausgeführt, so dass ein Einsatz der zusammengebauten Module als Nachrüstbauteil ermöglicht ist. Ein bevorzugtes Ausführungsbeispiel ist in Fig. 6 dargestellt.

Fig. 6 zeigt ein ASD-Modul 1 entsprechend einer der in den Figuren 1, 3, 4 dargestellten Ausführungsform und einen oxidationskatalytischen Konverter 27, der mit seinem Abgasauslass über lösbare Verbindungs- und Dichtmittel 26 direkt an die Gaseintrittsöffnung 5 des ASD-Moduls 1 angeschlossen werden kann. Auf diese Weise wird ein kompakter modularer Aufbau erreicht, der wartungsfreundlich ist und infolge der lösbar ausgeführten Verbindung eine einfache Austauschbarkeit der Einzelmodule ermöglicht. Über ein Abgaseinlassrohr 28 dem Konverter 27 zugeführtes Abgas wird durch einen im Gehäuse des Konverters 27 eingebauten Oxidationskatalysator nachbehandelt. Im Abgas enthaltenes NO wird dabei zu NO₂ oxidiert. Dem Partikelfilter 11 des ASD-Moduls 1 wird somit NO₂-haltiges Abgas zugeführt, was eine kontinuierliche Regeneration des Partikelfilters 11 ermöglicht.

## Patentansprüche

1. Kombiniertes Abgasreinigungs-Schalldämpfermodul als Abgasnachbehandlungssystem für ein Kraftfahrzeug mit Verbrennungsmotor, mit einem vorzugsweise quaderförmigen Gehäuse (2) mit
- einer als Abgaseinlasskammer ausgebildeten ersten Kammer (7),
- einer durch eine Trennwand (6) von der ersten Kammer (7) abgetrennten zweiten Kammer (8), die einen Abgasreinigungsbereich (9) mit einem darin angeordneten Abgasreinigungselement (11) und einen Schalldämpfungsbereich (10) mit darin angeordneten Mitteln zur Schalldämpfung aufweist, wobei die erste Kammer (7) und die zweite Kammer (8) so angeordnet sind, dass in die Abgaseinlasskammer (7) eingetretenes Abgas über das Abgasreinigungselement (11) in den Schalldämpfungsbereich (10) der zweiten Kammer gelangt, und
- Gaswegeschaltmitteln, die in Abhängigkeit vom in der ersten Kammer (7) vorhandenen Druck einen direkten Übertritt der Abgase von der ersten Kammer (7) in den Schalldämpferbereich (10) versperren oder ermöglichen, wobei die Gaswegeschaltmittel ein Schaltventil (17) umfassen,
**dadurch gekennzeichnet, dass** die Gaswegeschaltmittel ein von der ersten Kammer (7) durch die Trennwand (6) in den Schalldämpfungsbereich der zweiten Kammer (8) geführtes Überströmrohr (16) umfassen, dessen im Schalldämpfungsbereich (10) der zweiten Kammer (8) angeordnetes Ende von einem Dichtelement des Schaltventils (17) in Schließstellung verschlossen und in Offenstellung freigegeben ist, wobei das Schaltventil (17) in einen Übergangsstutzen (20) montiert ist und der Übergangsstutzen (20) samt anmontiertem Schaltventil (17) bei der Montage auf das Überströmrohr (16) schiebbar ist.

2. Abgasreinigungs-Schalldämpfermodul nach Anspruch 1,
**dadurch gekennzeichnet, dass**
das Abgasreinigungs-Schalldämpfermodul (1) als autonom betreibbares Nachrüstbauteil ausgeführt ist.

3. Abgasreinigungs-Schalldämpfermodul nach Anspruch 1 oder 2,
**dadurch gekennzeichnet, dass**
das Abgasreinigungselement (11) als Partikelfilter ausgebildet ist.

4. Abgasreinigungs-Schalldämpfermodul nach Anspruch 3,
**dadurch gekennzeichnet, dass**
der Partikelfilter (11) als ein aus Sintermetallfilterplatten aufgebautes Filterpaket ausgebildet ist.

5. Abgasreinigungs-Schalldämpfermodul nach einem der Ansprüche 1 bis 4,
**dadurch gekennzeichnet, dass**
ein Abgasaustrittsrohr (14) vorgesehen ist, das eine Ableitung von Abgas aus dem Schalldämpfungsbereich (10) heraus in den Außenbereich des Gehäuses (2) ermöglicht, wobei das Abgasaustrittsrohr (14) einen im Schalldämpfungsbereich (10) angeordneten Resonator (15) aufweist oder im Schalldämpfungsbereich (10) wenigstens abschnittsweise perforiert ausgeführt ist.

6. Abgasreinigungs-Schalldämpfermodul nach einem der Ansprüche 1 bis 5,
**dadurch gekennzeichnet, dass**
der Schalldämpfungsbereich (10) wenigstens teilweise mit einem Dämmmaterial ausgefüllt ist.

7. Abgasreinigungs-Schalldämpfermodul nach einem der Ansprüche 1 bis 6,
**dadurch gekennzeichnet, dass**
das Schaltventil (17) als ein vom Abgasdruck in der ersten Kammer (7) gesteuertes, autonom arbeitendes Schaltventil ausgeführt ist.

8. Abgasreinigungs-Schalldämpfermodul nach einem der Ansprüche 1 bis 7,
**dadurch gekennzeichnet, dass**
das Schaltventil (17) ein auf das Dichtelement des Schaltventils (17) einwirkendes, außerhalb des Gehäuses (2) angeordnetes Betätigungselement (18) aufweist.

9. Abgasreinigungs-Schalldämpfermodul nach einem der Ansprüche 1 bis 8,
**dadurch gekennzeichnet, dass**
das Gehäuse (2) doppelwandig ausgeführt ist.

## Claims

1. A combined exhaust gas purification/sound absorber module as exhaust gas after-treatment system for a motor vehicle with combustion engine, comprising a preferably block-shaped housing (2) with
- a first chamber (7) provided as exhaust gas inlet chamber,
- a second chamber (8) separated by a partition wall (6) from the fist chamber (7), said second chamber comprising an exhaust gas purification portion (9) with an exhaust gas purification element disposed therein and a sound absorbing portion (10) with sound absorbing means disposed therein, said first chamber (7) and said second chamber (8) being disposed such that exhaust gas which has entered the exhaust gas inlet chamber (7) passes via the exhaust gas purification member (11) into the sound absorbing portion (10) of the second chamber, and
- gas path switching means which, depending on the pressure present in the first chamber (7), impede or enable a direct transfer of the exhaust gas from the first chamber (7) into the sound absorbing portion (10), said gas path switching means comprising a changeover valve (17),
**characterized in that** the gas path switching means comprise an overflow duct (16) extending from the first chamber (7) through the partition wall (6) in the sound absorbing portion of the second chamber (8), wherein the end of said overflow duct which is positioned in the sound absorbing portion (10) of the second chamber (8) is closed by a sealing member of the changeover valve (17) in a closed position and released in an open position, said changeover valve (17) being mounted in a connecting piece (20) and the connecting piece (20) together with the changeover valve (17) mounted thereon being capable of being shifted on the overflow duct (16) during assembly.

2. The exhaust gas purification/sound absorber module according to claim 1, **characterized in that** the exhaust gas purification/sound absorber module (1) is provided as autonomously operable retrofit member.

3. The exhaust gas purification/sound absorber module according to claim 1 or 2, **characterized in that** the exhaust gas purification member (11) is provided as particle filter.

4. The exhaust gas purification/sound absorber module according to claim 3, **characterized in that** the particle filter (11) is provided as filter package composed of sinter metal filter plates.

5. The exhaust gas purification/sound absorber module according to one of claims 1 to 4, **characterized in that** an exhaust gas outlet duct (14) is provided which enables exhaust gas to be discharged from the sound absorbing portion (10) to the exterior portion of the housing (2), wherein the exhaust gas outlet duct (14) comprises a resonator (15) disposed in the sound absorbing portion (10) or is provided in the sound absorbing portion (10) at least over sections in perforated form.

6. The exhaust gas purification/sound absorber module according to one of claims 1 to 5, **characterized in that** the sound absorbing portion (10) is filled out at least partially with an insulating material.

7. The exhaust gas purification/sound absorber module according to one of claims 1 to 6, **characterized in that** the changeover valve (17) is provided as an autonomously operating changeover valve controlled by the exhaust gas pressure in the first chamber (7).

8. The exhaust gas purification/sound absorber module according to one of claims 1 to 7, **characterized in that** the changeover valve (17) comprises an actuating means (18) which acts on the insulating member of the changeover valve (17) and is positioned outside of the housing (2).

9. The exhaust gas purification/sound absorber module according to one of claims 1 to 8, **characterized in that** the housing (2) is provided double-walled.

## Revendications

1. Module combiné d'épuration des gaz d'échappement et d'amortissement des bruits en tant que système de retraitement des gaz d'échappement pour véhicule automobile équipé d'un moteur à combustion, comportant de préférence un boîtier parallélépipédique (2) et
- une première chambre (7) formée en tant que chambre d'admission des gaz d'échappement,
- une seconde chambre (8) séparée de la première chambre (7) par une paroi de séparation (6), qui présente une zone d'épuration des gaz d'échappement (9) avec un élément de purification des gaz d'échappement (11) disposé à l'intérieur, et une zone d'amortissement des bruits (10) avec des moyens d'amortissement des bruits disposés à l'intérieur, la première chambre (7) et la seconde chambre (8) étant disposées de façon telle que le gaz d'échappement entré dans la chambre d'admission (7) parvient dans la zone d'amortissement des bruits (10) de la seconde chambre par l'élément d'épuration des gaz d'échappement (11), et
- des moyens de commutation de la trajectoire des gaz qui, en fonction de la pression régnant dans la première chambre (7), bloquent ou autorisent un passage direct des gaz d'échappement depuis la première chambre (7) dans la zone d'amortissement des bruits (10), les moyens de commutation de la trajectoire des gaz comportant une valve de commande,
**caractérisé en ce que** les moyens de commutation de la trajectoire des gaz comportent un conduit de trop-plein (16) guidé depuis la première chambre (7) par la paroi de séparation (6) dans la zone d'amortissement des bruits de la seconde chambre (8), conduit de trop-plein dont l'extrémité disposée dans la zone d'amortissement des bruits (10) de la seconde chambre (8) est fermée en position de fermeture par un élément d'étanchéité de la valve de commande (17) et en est libéré en position d'ouverture, la valve de commande (17) étant montée dans une tubulure de raccordement (20) et la tubulure de raccordement (20) avec valve de commande (17) montée pouvant être déplacée lors du montage sur le conduit de trop-plein (16).

2. Module d'épuration des gaz d'échappement et d'amortissement des bruits selon la revendication 1, **caractérisé en ce que** le module d'épuration des gaz d'échappement et d'amortissement des bruits (1) est exécuté en tant qu'accessoire à actionnement autonome.

3. Module d'épuration des gaz d'échappement et d'amortissement des bruits selon la revendication 1 ou 2, **caractérisé en ce que** l'élément d'épuration des gaz d'échappement (11) est exécuté en tant que filtre à particules.

4. Module d'épuration des gaz d'échappement et d'amortissement des bruits selon la revendication 3, **caractérisé en ce que** le filtre à particules (11) est exécuté en tant qu'ensemble filtrant formé de plaques filtrantes en métal fritté.

5. Module d'épuration des gaz d'échappement et d'amortissement des bruits selon l'une des revendications 1 à 4, **caractérisé en ce qu'**un conduit de sortie des gaz d'échappement (14) est prévu, lequel permet une dérivation des gaz d'échappement depuis la zone d'amortissement des bruits (10) dans la zone externe du boîtier (2), le conduit de sortie des gaz d'échappement (14) présentant un résonateur (15) disposé dans la zone d'amortissement des bruits (10) ou étant exécuté dans la zone d'amortissement des bruits (10) en étant perforé au moins par segments.

6. Module d'épuration des gaz d'échappement et d'amortissement des bruits selon l'une des revendications 1 à 5, **caractérisé en ce que** la zone d'amortissement des bruits (10) est remplie au moins partiellement d'un matériau isolant.

7. Module d'épuration des gaz d'échappement et d'amortissement des bruits selon l'une des revendications 1 à 6, **caractérisé en ce que** la valve de commande (17) est exécutée en tant que valve de commande travaillant de façon autonome, commandée par la pression des gaz d'échappement régnant dans la première chambre (7).

8. Module d'épuration des gaz d'échappement et d'amortissement des bruits selon l'une des revendications 1 à 7, **caractérisé en ce que** la valve de commande (17) présente un élément d'actionnement (18), disposé à l'extérieur du boîtier (2), et agissant sur l'élément d'étanchéité de la valve de commande (17).

9. Module d'épuration des gaz d'échappement et d'amortissement des bruits selon l'une des revendications 1 à 8, **caractérisé en ce que** le boîtier (2) est exécuté avec une double paroi.
